# EUROPEAN PATENT APPLICATION

(11) **EP 3 839 379 A2**
(43) Date of publication of application: **23.06.2021**
(21) Application number: 21154992.8
(22) Date of filing: 14.07.2017
(51) Int. Cl.: F25B 21/00, B22F 3/00, C22C 19/03, H01F 1/01

(54) **MAGNETIC MEMBER FOR MAGNETIC REFRIGERATOR**

(30) Priority: 02.11.2016 JP 2016215589
(62) Divisional of application: 17868043.5
(71) Applicant: NGK INSULATORS, LTD., Nagoya-shi, Aichi 4678530 (JP)
(72) Inventor: KIKUCHI, Yoshio, Aichi, 4678530 (JP); KOBAYASHI, Yoshimasa, Aichi, 4678530 (JP)
(74) Representative: Müller-Boré & Partner Patentanwälte PartG mbB

(57) **Abstract**

A magnetic member for a magnetic refrigerator, the magnetic member comprising: a tubular outer layer; and a unitary wall body having magnetocaloric effect, extending along an axial direction of the outer layer inside the outer layer, partitioning an inner space of the outer layer into a plurality of spaces and defining a plurality of passages that extend in the axial direction inside the outer layer.

## Description

### Technical Field

This application claims priority to Japanese Patent Application No. 2016-215589 filed on November 2, 2016, the contents of which are hereby incorporated by reference into the present application. The present disclosure relates to a magnetic member used for a magnetic refrigerator and having magnetocaloric effect.

### Background Art

A magnetic material, of which temperature changes due to entropy therein being changed by a given magnetic field change, is known. Then, an AMR (Active Magnetic Regenerative) refrigeration technology is known which generates a temperature difference between ends of a container in which a magnetic member constituted of the above magnetic material is disposed by allowing a heat transport medium to flow therethrough. Japanese Patent Application Publication No. 2007-147209 describes examples that a container is filled with granular magnetic members, that mesh magnetic members are stacked in the container, and that a honeycomb magnetic member formed by bending a thin plate into an accordion shape is disposed in the container, in order to ensure fluidity of a heat transport medium and heat exchange performance between the heat transport medium and the magnetic member(s).

### Summary of Invention

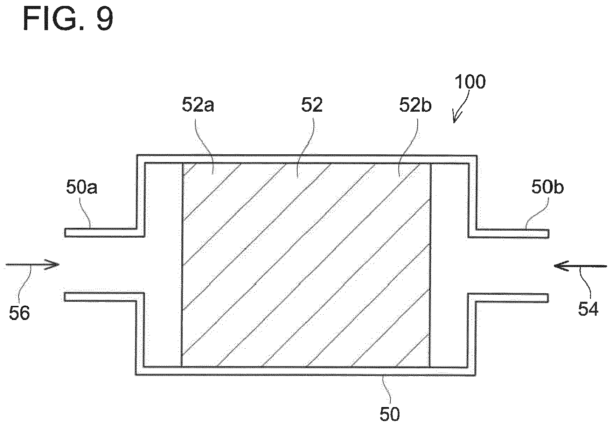

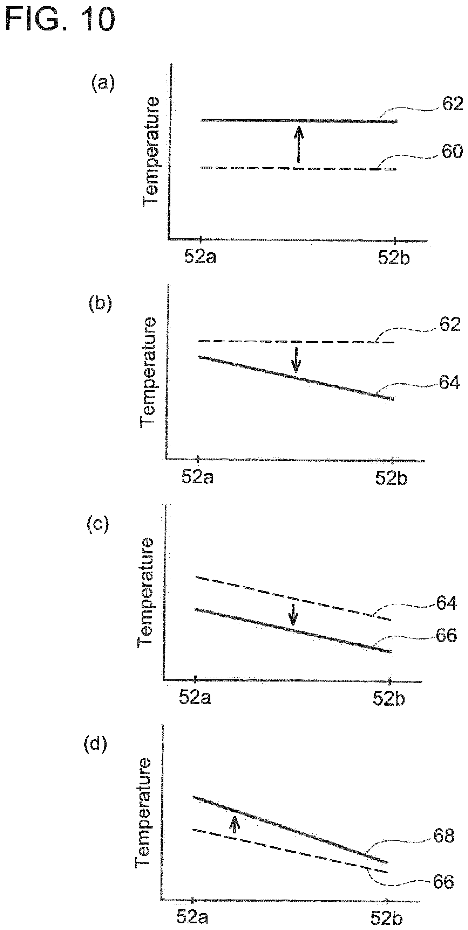

Firstly, the AMR refrigeration will be described with reference to FIGS. 9 and 10. FIG. 9 shows a schematic diagram of a refrigerator (a heat exchanger) 100 that employs the AMR refrigeration. A magnetic member 52 is disposed in a container 50. Ends of the container 50 are respectively provided with openings 50a, 50b through which a heat transport medium flows in and flows out. FIG. 10 shows temperature distributions in the magnetic member 52. A horizontal axis represents positions of the magnetic member 52 and a vertical axis represents temperatures of the magnetic member. When a magnetic field is applied to the magnetic member 52, a temperature of the magnetic member 52 increases overall from a line 60 to a line 62 as shown in (a). Then, when the heat transport medium moves from the opening 50b toward the opening 50a in a direction of an arrow 54, the heat transport medium moves through the magnetic member 52 while drawing heat from the magnetic member 52. As a result, a temperature difference is generated between an end portion 52a of the magnetic member 52 and another end portion 52b thereof, as shown by a line 64 in (b). Thereafter, when the magnetic member 52 is demagnetized, the temperature of the magnetic member 52 decreases overall with a slope of the line 64 maintained, as shown by a line 66 in (c). After that, when the heat transport medium moves from the opening 50a toward the opening 50b in a direction of an arrow 56, the heat transport medium moves through the magnetic member 52 while giving heat to the magnetic member 52, as a result of which the temperature difference between the end portions 52a and 52b increases as shown by a line 68 in (d). By repeating a cycle of (a) to (d), the temperature difference between the end portions 52a and 52b further increases.

In a refrigerator employing the AMR refrigeration, a large temperature difference needs to be generated between ends of its magnetic member. For this reason, it is necessary to facilitate heat exchange between the magnetic member and a heat transport medium. The heat exchange between the magnetic member and the heat transport medium can be facilitated, for example, by increasing a contact area between the magnetic member and the heat transport medium and/or by decreasing a traveling speed of the heat transport medium. However, if the traveling speed of the heat transport medium is decreased, a temperature gradient is less likely to be generated in the above-described steps (b), (d), as a result of which the temperature difference between the ends of the magnetic member becomes small. Meanwhile, if the contact area between the magnetic member and the heat transport medium is increased, a pressure loss is increased generally, and the traveling speed of the heat transport medium is thereby decreased. As a result, the temperature difference between the ends of the magnetic member may become small. To realize a highly effective magnetic refrigerator, it is necessary to improve a structure of magnetic member. The disclosure herein aims to provide a novel structure of magnetic member used in a magnetic refrigerator.

### Solution to Technical Problem

The disclosure herein discloses a magnetic member for a magnetic refrigerator. The magnetic member may comprise an outer layer and a unitary wall body. The outer layer may have a tubular shape. The wall body may have magnetocaloric effect. The wall body may extend along an axial direction of the outer layer inside the outer layer, partition an inner space of the outer layer into a plurality of spaces, and define a plurality of passages that extend in the axial direction inside the outer layer.

The above magnetic member can adjust heat exchange efficiency between the magnetic member and a heat transport medium by adjusting a porosity ratio inside the outer layer, which is represented by "(an internal volume of the outer layer - a volume of the wall body) / (the internal volume of the outer layer)". Further, the above magnetic member can reduce a pressure loss of the magnetic member by decreasing a traveling speed of the heat transport medium by adjusting sizes of the spaces (the passages) partitioned by the wall body. With the above magnetic member, a high-performance magnetic refrigerator having a large temperature gradient can be realized. It should be noted that "unitary wall body" means that walls defining the spaces are configured in a unitary structure and that plural components are not joined to one another to configure the unitary wall body. In other words, there is no joined surfaces in walls surrounding the spaces.

### Brief Description of Drawings

FIG. 1 shows a perspective view of a magnetic member of a first embodiment;
FIG. 2 shows a cross-sectional view along a line II-II in FIG. 1;
FIG. 3 shows a cross-sectional view of a refrigerator using the magnetic member of the first embodiment;
FIG. 4 shows a cross-sectional view of a magnetic member of a second embodiment;
FIG. 5 is a cross-sectional view along a line V-V in FIG. 4;
FIG. 6 shows a cross-sectional view of a magnetic member of a third embodiment;
FIG. 7 shows a cross-sectional view of a magnetic member of a fourth embodiment;
FIG. 8 shows an explanatory diagram for a state of particles constituting a wall body;
FIG. 9 shows a cross-sectional view of a refrigerator employing the AMR refrigeration; and
FIG. 10 shows an explanatory diagram for changes in temperature of a magnetic member with the AMR refrigeration.

### Description of Embodiments

Some of the features characteristic to the technology disclosed herein will be listed below. It should be noted that the respective technical elements are independent of one another, and are useful solely or in combinations.

A magnetic member disclosed herein may be used in a magnetic refrigerator. The magnetic refrigerator may comprise a hollow case and the magnetic member disposed in the hollow case. Openings (a first opening, a second opening) through which a heat transport medium flows in and flows out may be provided respectively at ends of the hollow case. The magnetic member may be disposed between the first opening and the second opening. The magnetic member may include a passage through which the heat transport medium moves from the first opening to the second opening (or from the second opening to the first opening). The magnetic member may comprise a tubular outer layer and a wall body disposed in the outer layer. The wall body may have magnetocaloric effect and extend along an axial direction of the outer layer inside the outer layer. Further, the wall body may be unitary, partition an inner space of the outer layer into a plurality of spaces and define a plurality of passages that extend in the axial direction inside the outer layer. The heat transport medium may move through the passages partitioned by the wall body. Examples of the heat transport medium include water, alcohols, oils, air and the like.

As described above, the spaces (the passages) are provided inside the magnetic member. Further, the wall body itself may be constituted of a porous body. In this case, there are spaces inside the wall body as well. To distinguish these spaces, in the disclosure herein, the spaces partitioned by the wall body (inner spaces of the outer layer that are devoid of the wall body) are termed "passages", and the spaces inside the wall body are termed "voids". Further, a ratio of the "passages" to the inner space of the outer layer is termed "porosity ratio", and a ratio of the "voids" inside the wall body is termed "void ratio".

Various shapes can be adopted for a shape of the magnetic member (the outer layer) depending on a shape of the hollow case. A shape of cross section (a cross section perpendicularly intersecting the axial direction) of the magnetic member may be circular, ellipsoidal, polygonal, or the like. The outer layer may have the magnetocaloric effect, or may not have magnetocaloric effect. The outer layer may be constituted of metal, resin, ceramic, or a composite material thereof. A thickness of the outer layer may be 0.3 mm to 5 mm. Further, the porosity ratio of the magnetic member may be 50% to 90%. With the porosity ratio of 50% or more, the passages through which the heat transport medium move can be sufficiently ensured in the magnetic member. Further, with the porosity ratio of 90% or less, the magnetic member can ensure a sufficient strength and sufficient heat quantity.

The wall body may be constituted of a material having the magnetocaloric effect. Examples of a material having the magnetocaloric effect include gadolinium (Gd), Gd compounds, La (Fe, Si)₁₃ compounds, La (Fe, Si)₁₃H compounds, (Mn, Fe)2(P, Si) compounds, Ni₂MnGa alloys, and the like. The wall body may be constituted of the above-mentioned substance(s) only, or may be formed by hardening a mixture of powder (or particles) of the above-mentioned substance(s) and a bonding material. Examples of the bonding material include inorganic binders such as clay, Al₂O₃, SiO₂, glass and silicon resin; thermosetting resins such as phenol resin; and thermoplastic resins such as polypropylene (PP). With the wall body that is formed by hardening the mixture of powder having the magnetocaloric effect (magnetic body) and the bonding material, heat transmission in the magnetic member in the axial direction is suppressed because contact between the magnetic bodies is suppressed, as a result of which the temperature difference between the ends of the magnetic member can be maintained to be large. Further, the wall body may include fibers of cellulose, glass, aluminosilicate and the like to improve the strength of the wall body.

The wall body may provid a honeycomb structure in which passages having a same shape are provided, inside the outer layer. A shape of cross sections (cross sections perpendicularly intersecting the axial direction) of the passages may be circular, ellipsoidal, polygonal, or the like. The wall body may be unitary. The unitary wall body can be formed, for example, by extrusion molding.

A thickness of the wall body may be 50 µm to 1 mm. With the thickness of the wall body of 50 µm and more, strength of the passages through which the heat transport medium flows can be ensured. Further, with the thickness of the wall body of 1 mm or less, the porosity ratio in the outer layer can be increased and the contact area between the heat transport medium and the wall body (magnetic body) can be increased. In some cases, the passage(s) may be partially blocked to move the heat transport medium to its adjacent passage(s) through the wall body. In such cases, the thickness of the wall body may be 500 µm or less to suppress moving resistance of the heat transport medium.

The void ratio of the wall body may be 70% or less. In the case where the heat transport medium is moved to the adjacent passage(s) through the wall body, the void ratio of the wall body may be 30% or more. In a case where the heat transport medium is not moved to the adjacent passage(s), the void ratio of the wall body may be 70% or less in terms of maintaining the strength of the wall body.

The magnetic member may be a combination of plural partial magnetic members having different magnetic transition temperatures (Curie temperatures). Specifically, the magnetic member may be a member in which plural partial magnetic members are joined in the axial direction. The partial magnetic members may be arranged in the axial direction in descending order of their magnetic transition temperatures. That is, the magnetic member may include at least a first partial magnetic member and a second partial magnetic member having a magnetic transition temperature different from that of the first partial magnetic member, and the first partial magnetic member and the second partial magnetic member may be joined in the axial direction. When a temperature gradient is generated in the magnetic member in the axial direction, the magnetocaloric effect is appropriately yielded in each of the partial magnetic members. The first partial magnetic member and the second partial magnetic member may be joined to each other with a material having a lower thermal conductivity than the wall body. Due to this, heat is less likely to transfer between the first partial magnetic member and the second partial magnetic member, and the temperature gradient in the axial direction can be suppressed from becoming small.

At least one passage among the passages surrounded by the wall body may include a sealing body that blocks a space in the at least one passage. The sealing body may be provided at a part of the at least one passage in the axial direction. With the sealing body, the heat transport medium cannot pass through the at least one passage from one end to another end thereof, and therefore moves to its adjacent passage(s) through the wall body while flowing in the at least one passage. When the heat transport medium passes through the wall body, greater heat exchange occurs between the heat transport medium and the wall body (magnetic body). The sealing body may be provided at an intermediate portion of the at least one passage, or may be provided at an end of the at least one passage. Providing the sealing body at the end of the at least one passage facilitates manufacturing of the magnetic member, as compared to providing it at the intermediate portion. Further, the sealing body may be provided at one end of each passage in each of the above-described first partial magnetic member and second partial magnetic member. As a result of joining such first partial magnetic member and second partial magnetic member, some of the sealing bodies may be provided at intermediate portions of the passages. A density of the sealing body may be higher than a density of the wall body. Further, the sealing body may be constituted of a material having a higher heat capacity than a material constituting the wall body. Examples of the material of the sealing body include alumina, stainless steel, resin, glass, and the like.

### Embodiments

### (First Embodiment)

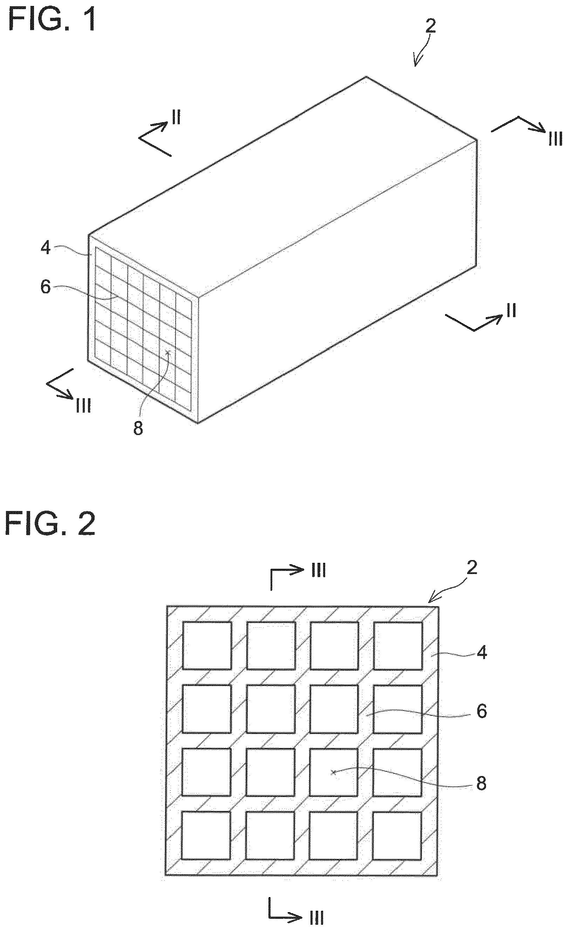

A magnetic member 2 and a refrigerator 30 will be described with reference to FIGS. 1 to 3. As shown in FIGS. 1 and 2, the magnetic member 2 has a shape of rectangular column and includes an outer layer 4 and a wall body 6. The wall body 6 extends along an axial direction of the magnetic member 2 (the outer layer 4) inside the outer layer 4. The wall body 6 defines a plurality of passages 8. The passages 8 extend from one end of the magnetic member 2 to another end thereof. That is, the passages 8 are exposed at both end faces of the magnetic member 2 in the axial direction (FIGS. 1 and 2 show one of the end faces). The magnetic member 2 includes a honeycomb structure. The magnetic member 2 is manufactured by extrusion-molding a mixture of La (Fe, Si)₁₃ compound particles having magnetocaloric effect and glass powder functioning as an inorganic binder. The outer layer 4 and the wall body 6 are integrally molded and are constituted of a same material.

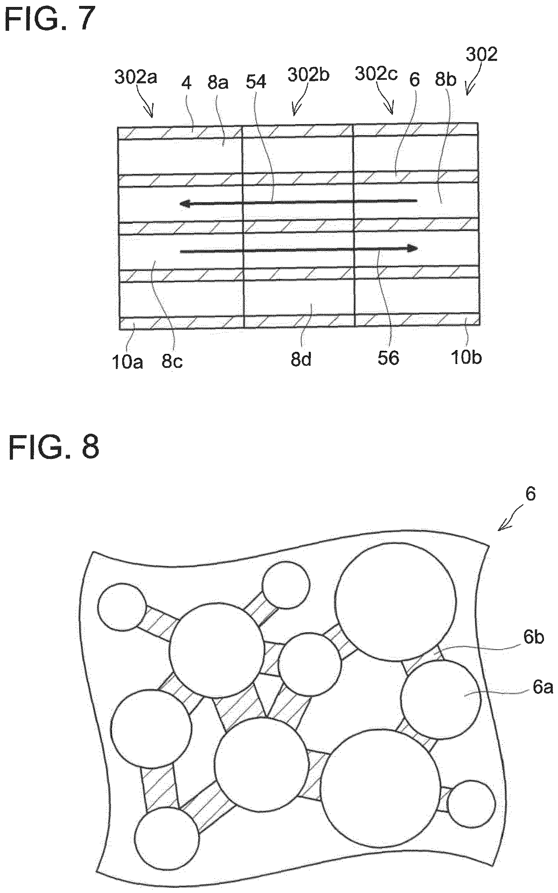

Here, with reference to FIG. 8, particles 6a and an inorganic binder 6b constituting the wall body 6 (the magnetic member 2) will be described. As shown in FIG. 8, the particles 6a are bounded by the inorganic binder 6b. Since the inorganic binder 6b exists between the particles 6a, each one of the particles 6a is not in contact with another one of the particles 6a. The inorganic binder 6b is in contact with a part of a surface of each particle 6a and does not cover an entirety of the surface of each particle 6a. In other words, a part of the surface of each particle 6a is exposed to a void.

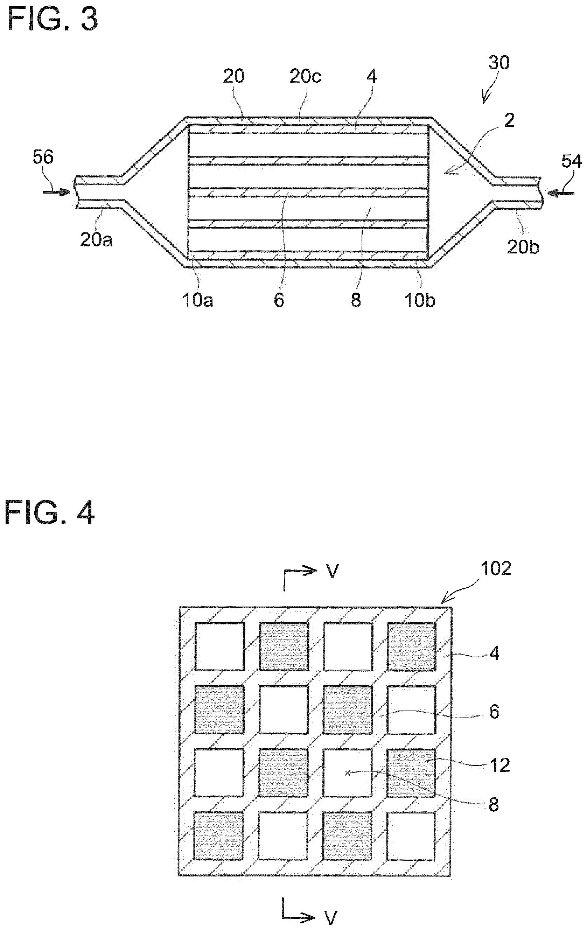

FIG. 3 shows a cross-sectional view of the refrigerator 30 including the magnetic member 2. The refrigerator 30 includes a container 20 and the magnetic member 2. The magnetic member 2 is disposed at a center portion 20c of the container 20. A first opening 20a and a second opening 20b are provided respectively at both ends of the container 20. A heat transport medium (e.g., water) flows in and flows out through the openings 20a, 20b. An inner diameter of the container 20 continuously increases from each of its ends (the openings 20a, 20b) toward the center portion 20c. Therefore, the heat transport medium that has flowed in from the opening 20a or 20b can move smoothly to the passages 8 located on an outer side in the magnetic member 2 (passages located in an outer portion of a cross section perpendicularly intersecting the axial direction (cross section shown in FIG. 2)). That is, it is possible to suppress the heat transport medium from concentrating to the passages 8 located around a center in the magnetic member 2 (passages located in a center portion of the cross section perpendicularly intersecting the axial direction).

In the refrigerator 30, the heat transport medium is moved in a direction of an arrow 54 while the magnetic member 2 is magnetized, and the heat transport medium is moved in a direction of an arrow 56 while the magnetic member 2 is demagnetized, for example. Specifically, the cycle of (a) to (d), which was described referring to FIGS. 9 and 10, is repeated to generate a temperature gradient in the magnetic member 2 from a first end 10a to a second end 10b thereof. The first end 10a comes to have a high temperature and the second end 10b comes to have a low temperature. The heat transport medium is moved by a pump (not shown) connected to the refrigerator 30.

Advantages of the magnetic member 2 will be described. As described above, the magnetic member 2 includes the honeycomb structure in which an inside of the outer layer 4 is partitioned into a plurality of spaces (the passages 8) by the unitary wall body 6. The magnetic member 2 with the honeycomb structure can easily control a structure of flow passages as compared to, for example, a magnetic member with a structure filled with particles. Specifically, the magnetic member 2 can ensure the passages 8 that extend linearly and have a same size from their one ends to their other ends (see FIG. 3). Further, the magnetic member 2 can control a porosity ratio (a ratio of the passages with respect to the magnetic member) and a size of the passages (areas, hydraulic diameters and the like thereof) by adjusting an arrangement of the wall body 6. By using the magnetic member 2, a pressure loss in the refrigerator 30 and heat exchange efficiency between the heat transport medium and the magnetic member can be accurately controlled.

A magnetic member in which a thin plate that was processed into an accordion shape is rolled and a magnetic member in which flat plates and accordion-shaped thin plates are stacked are also referred to as a magnetic member including a honeycomb structure. Magnetic members including these structures can also ensure passages that extend linearly from their one ends to their other ends. However, in these magnetic members, a thickness of the thin plate (corresponding to a thickness of the wall body 6 of the magnetic member 2) is restricted due to the processing for the accordion shape, and a size of the passages is difficult to adjust. In addition, a material and a void ratio of their wall bodies are also restricted due to the processing for the accordion shape. Further, for the honeycomb structure using accordion-shaped thin plates, the passages are formed by joining the thin plates together. Since individual thin plates or different portions of the thin plates are joined together, the plates hit to one another due to vibrations and the like, by which galling and damage may be caused. By using the honeycomb structure in which the inside of the outer layer 4 is partitioned by the unitary wall body 6 as in the present embodiment, durability can be improved, the thickness of the wall body and the size of passages can be adjusted, and a large temperature gradient can be generated between the both ends of the magnetic member.

Further, since the particles 6a that constitute the wall body 6 are not in contact with one another, heat transmission between the particles 6a is suppressed. Since heat diffusion in an axial direction of the wall body 6 is suppressed, the temperature difference between the first end 10a and the second end 10b can be maintained favorably.

### (Second Embodiment)

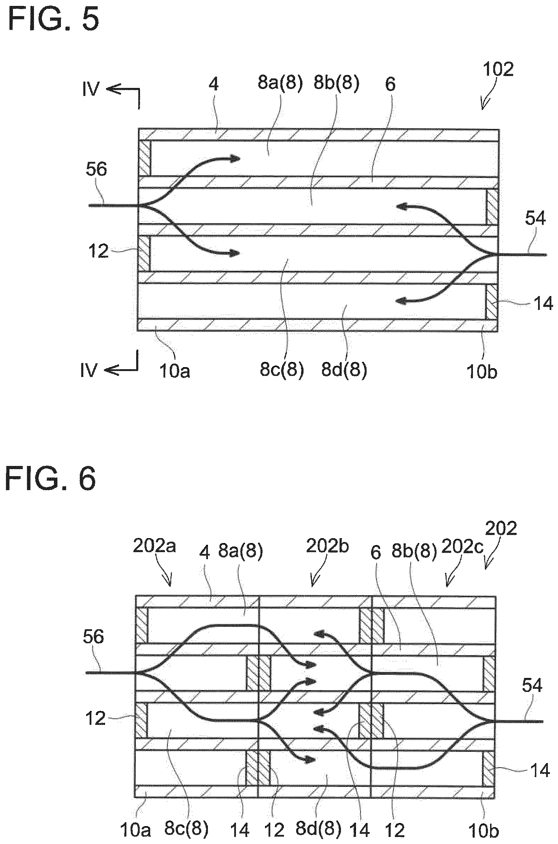

A magnetic member 102 will be described with reference to FIGS. 4 and 5. The magnetic member 102 can be used in the refrigerator 30 (see FIG. 3) in place of the magnetic member 2. The magnetic member 102 is a variant of the magnetic member 2. For configurations of the magnetic member 102 that are the same as those of the magnetic member 2, the same reference signs are assigned and explanation thereof may be omitted.

In the magnetic member 102, one end of each passage 8 in the axial direction is blocked by a sealing body 12 or 14. Specifically, a part of the first end 10a of the magnetic member 102 is blocked by the first sealing bodies 12, and a part of the second end 10b is blocked by the second sealing bodies 14. As shown by passages 8a, 8b, the second sealing body 14 is provided in the passage 8 (the passage 8b) that is adjacent to the passage 8 (the passage 8a) in which the first sealing body 12 is provided. That is, the first sealing body 12 is not provided in the passage 8 that is adjacent to the passage 8 in which the first sealing body 12 is provided, and the second sealing body 14 is not provided in the passage 8 that is adjacent to the passage 8 in which the second sealing body 14 is provided. With the sealing bodies 12, 14 provided, the heat transport medium cannot pass through each of the passages 8 from one end to the other end thereof, and therefore moves to its adjacent passage(s) 8 through the wall body 6. Specifically, the heat transport medium that was supplied from the first end 10a to the passage 8b moves to its adjacent passages 8a, 8c by passing through an inside of the wall body 6 as shown by the arrow 56 and then flows out from the second end 10b. Similarly, the heat transport medium that was supplied from the second end 10b to the passage 8c moves to its adjacent passages 8b, 8d by passing through the inside of the wall body 6 as shown by the arrow 54 and then flows out from the first end 10a. As described above, the wall body 6 is constituted of the particles 6a and the inorganic binder 6b, and a part of the surface of each particle 6a is exposed to a void (see FIG. 8). Therefore, when the heat transport medium passes through the inside of the wall body 6, heat is efficiently exchanged between the particles 6a (magnetic body) and the heat transport medium.

In the magnetic member 102, the heat transport medium moves from the passage 8 to which it was supplied to its adjacent passage(s) 8 by passing through the wall body 6 while moving through the magnetic member 102 (the passage 8) and then flows out from the passage(s) 8 adjacent to the passage 8 to which it was supplied. When passing through the wall body 6, the heat transport medium contacts with the magnetic body constituting the wall body 6 and heat is exchanged effectively therebetween. Although the heat transport medium does not move linearly in the passages 8 in the magnetic member 102, it does not constantly move through the wall body 6. Therefore, the magnetic member 102 can reduce the pressure loss as compared to a magnetic member filled with particles.

### (Third Embodiment)

With reference to FIG. 6, a magnetic member 202 will be described. The magnetic member 202 can also be used in the refrigerator 30 (see FIG. 3) in place of the magnetic member 2. The magnetic member 202 is a variant of the magnetic member 102. For configurations of the magnetic member 202 that are the same as those of the magnetic member 102, the same reference signs are assigned and explanation thereof may be omitted.

The magnetic member 202 includes a first partial magnetic member 202a, a second partial magnetic member 202b and a third partial magnetic member 202c. A structure of each of the partial magnetic members 202a, 202b and 202c is substantially the same as that of the magnetic member 102. The partial magnetic members 202a, 202b and 202c are constituted of materials having different magnetic transition temperatures from one another. The first partial magnetic member 202a including the first end 10a is constituted of a material having the highest magnetic transition temperature, and the third partial magnetic member 202c including the second end 10b is constituted of a material having the lowest magnetic transition temperature. That is, the magnetic transition temperatures of the materials become lower from a high-temperature side (the first end 10a) of the magnetic member 202 toward a low-temperature side (the second end 10b) thereof.

The first partial magnetic member 202a and the second partial magnetic member 202b are connected to each other such that ends of their passages 8 at which the sealing bodies 12, 14 are not provided are connected to each other as well as such that the second sealing bodies 14 of the first partial magnetic member 202a are in contact with the first sealing bodies 12 of the second partial magnetic member 202b. Specifically, in the magnetic member 202, the passages 8 of the first partial magnetic member 202a in which the first sealing bodies 12 are provided are connected to the passages 8 of the second partial magnetic member 202b in which the second sealing bodies 14 are provided (the passages 8a, 8c), and the passages 8 of the first partial magnetic member 202a in which the second sealing bodies 14 are provided are connected to the passages of the second partial magnetic member 202b in which the first sealing bodies 12 are provided (the passages 8b, 8d). The partial magnetic members 202a, 202b and 202c are connected to one another with resin. The resin has a lower heat conductivity than the wall body 6. How the second partial magnetic member 202b and the third partial magnetic member 202c are connected to each other is substantially the same as how the first partial magnetic member 202a and the second partial magnetic member 202b are connected to each other, and thus explanation thereof is omitted.

In the magnetic member 202, the partial magnetic members 202a, 202b and 202c are connected to each other such that the first sealing bodies 12 and the second sealing bodies 14 are in contact with each other. Since the sealing bodies (the sealing bodies 12, 14) are provided at intermediate portions of the passages 8, the heat transport medium passes through the wall body 6 plural times (three times, in case of the magnetic member 202) while it moves from the first end 10a to the second end 10b (or from the second end 10b to the first end 10a). Due to this, heat exchange efficiency between the heat transport medium and the magnetic member 202 can be further improved. Further, since the magnetic transition temperatures of the materials become higher from the low-temperature side to the high-temperature side in the magnetic member 202, heat can be efficiently exchanged in each temperature region. Further, since the partial magnetic members 202a, 202b and 202c are connected to each other with the material (resin) having a lower heat conductivity than the material of the wall body 6, heat can be suppressed from transferring between the first partial magnetic member 202a and the second partial magnetic member 202b and between the second partial magnetic member 202b and the third partial magnetic member 202c. Therefore, the temperature difference between the first end 10a and the second end 10b can be maintained.

### (Fourth Embodiment)

FIG. 7 shows a magnetic member 302. The magnetic member 302 is a variant of the magnetic member 202. For configurations of the magnetic member 302 that are the same as those of the magnetic member 202, the same reference signs are assigned and explanation thereof may be omitted. The magnetic member 302 can also be used in the refrigerator 30 (see FIG. 3) in place of the magnetic member 2.

The magnetic member 302 includes a first partial magnetic member 302a, a second partial magnetic member 302b and a third partial magnetic member 302c. The partial magnetic members 302a, 302b and 302c have structures that are substantially the same to each other and their magnetic transition temperatures are different. The first partial magnetic member 302a is constituted of a material having the highest magnetic transition temperature and the third partial magnetic member 302 is constituted of a material having the lowest magnetic transition temperature. In the magnetic member 302 as well, the magnetic transition temperatures of the materials become higher from its low-temperature side toward high-temperature side.

In the magnetic member 302, no sealing body is provided in any of the passages 8. Therefore, in the magnetic member 302, the heat transport medium moves linearly in each of the passages 8 from its one end to the other end. That is, in the magnetic member 302, the heat transport medium does not pass through the wall body 6 to move to the adjacent passage(s) 8. The magnetic member 302 can further reduce a pressure loss as compared to the magnetic member 202.

The above-described second and third embodiments describe examples that all the passages are provided with the first sealing body or the second sealing body. However, the magnetic member may include both the passage in which no sealing body is provided and the passage in which the first sealing body or the second sealing body is provided. Further, the third and fourth embodiments describe examples that one magnetic member is constituted of three partial magnetic members, however, the number of partial magnetic members may be two, or may be four or more.

While specific examples of the present disclosure have been described above in detail, these examples are merely illustrative and place no limitation on the scope of the patent claims. The technology described in the patent claims also encompasses various changes and modifications to the specific examples described above. The technical elements explained in the present description or drawings provide technical utility either independently or through various combinations. The present disclosure is not limited to the combinations described at the time the claims are filed. Further, the purpose of the examples illustrated by the present description or drawings is to satisfy multiple objectives simultaneously, and satisfying any one of those objectives gives technical utility to the present disclosure.

## Claims

1. A magnetic member for a magnetic refrigerator, the magnetic member comprising:
a tubular outer layer; and
a unitary wall body having magnetocaloric effect, extending along an axial direction of the outer layer inside the outer layer, partitioning an inner space of the outer layer into a plurality of spaces and defining a plurality of passages that extend in the axial direction inside the outer layer,
wherein the unitary wall body is constituted of a porous body, walls defining the plurality of spaces are configured in a unitary structure, and plural components are not joined to one another to configure the unitary wall body such that there are no joined surfaces in walls surrounding the plurality of spaces, and
wherein at least one passage among the plurality of passages includes a sealing body, and the sealing body is provided at a part of the at least one passage in the axial direction and blocks a space of the at least one passage.

2. The magnetic member according to claim 1, wherein the sealing body is provided at an end of the at least one passage.

3. The magnetic member according to claim 1 or 2, wherein the magnetic member includes a first partial magnetic member and a second partial magnetic member having a magnetic transition temperature different from that of the first partial magnetic member, and the first partial magnetic member and the second partial magnetic member are joined in the axial direction.

4. The magnetic member according to any one of claims 1 to 3, wherein a thickness of the unitary wall body is 50 µm to 1 mm.

5. The magnetic member according to any one of claims 1 to 4, wherein a void ratio of the unitary wall body is 30% to 70%.
